# EUROPÄISCHE PATENTSCHRIFT

(11) **EP 3 169 613 B1**
(45) Veröffentlichungstag und Bekanntmachung des Hinweises auf die Patenterteilung: **21.08.2019**
(21) Anmeldenummer: 15734105.8
(22) Anmeldetag: 26.06.2015
(51) Int. Cl.: B65G 27/04

(54) **VIBRATIONSRINNE UND VIBRATIONSFÖRDERVORRICHTUNG ZUM TRANSPORT GESCHINDELTER PRODUKTE IN DER LEBENSMITTELPRODUKTION**
VIBRATING TROUGH AND VIBRATORY CONVEYING DEVICE FOR TRANSPORTING SHINGLED PRODUCTS IN FOOD PRODUCTION
GOULOTTE VIBRANTE ET DISPOSITIF DE TRANSPORT VIBRANT POUR LE TRANSPORT DE PRODUITS DISPOSÉS EN BARDEAUX DANS LA PRODUCTION D'ALIMENTS

(30) Priorität: 14.07.2014 DE 102014213639
(43) Veröffentlichungstag der Anmeldung: 24.05.2017
(73) Patentinhaber: Robert Bosch GmbH, 70442 Stuttgart (DE)
(72) Erfinder: LANDOLT, Markus, CH-8215 Hallau (CH); BLANZ, Peter, CH-8212 Neuhausen (CH)
(86) Internationale Anmeldenummer: PCT/EP2015/064594
(87) Internationale Veröffentlichungsnummer: WO 2016/008698

(56) Entgegenhaltungen:
- EP-A2- 0 191 731
- WO-A1-2008/074354
- CH-A- 479 468
- DE-C- 164 082
- FR-A- 1 487 108
- FR-A1- 2 957 591
- GB-A- 372 610
- JP-A- H05 319 537
- JP-U- S61 108 218
- US-A- 4 082 176

## Beschreibung

### Stand der Technik

Die vorliegende Erfindung betrifft Verwendung einer Vibrationsrinne zum Transport geschindelter Produkte in der Lebensmittelproduktion.

In der Lebensmittelproduktion werden Produkte, insbesondere Backwaren, wie z.B. Kekse, vom Ofen oder Kühlband flachliegend übernommen und einer Vibrationsrinne mehrbahnig mit Bändern und Rutschen geschindelt oder geschichtet zugeführt. Eine solche Vibrationsrinne dient als Transport- sowie Speicherstrecke und bringt den Transportstrang beispielsweise zu einem Portionierer oder Creamer. Treten Lücken in der Produktzufuhr auf, so entsteht ein Strangabriss. Runde Produkte in Vibrationsrinnen mit rundem Querschnitt schließen nach einem Strangabriss automatisch wieder an. Bei rechteckigen Produkten, aber auch bei Produkten anderer Grundform, muss der Anschluss manuell hergestellt werden, was hohe Kosten verursacht und fehleranfällig ist. Heute werden Vibrationsrinnen bei Produkten unterschiedlicher Form mit minimaler Umstellung verwendet, jedoch mit den zuvor beschriebenen Nachteilen.

DE102006045020A1 zeigt einen Förderaufbau, der mehrere Vibrationsrinnen umfasst, die in einer Reihe angeordnet sind und schwenkbar angeordnet sind, um die Förderung eines Erzeugnisses von dem Förderaufbau zu ermöglichen. Die einzelnen Vibrationsrinnen weisen dabei jeweils eine Oberfläche auf, die sich horizontal in eine Längsrichtung erstreckt.

GB372610A offenbart eine Vibrationsrinne mit keilförmigen Abschnitten.

EP 0 191 731 A2 offenbart die Verwendung einer Vibrationsrinne zum Transport geschindelter Produkte in der Lebensmittelproduktion nach dem Oberbegriff des Anspruchs 1.

### Offenbarung der Erfindung

Die erfindungsgemäße Verwendung einer Vibrationsrinne zum Transport geschindelter Produkte, insbesondere in der Lebensmittelproduktion, die Vibrationsrinne umfassend eine Transportoberfläche, die dazu eingerichtet ist, die Produkte zu tragen und zu einer Vibration angeregt zu werden, um die Produkte entlang der Transportoberfläche von einem Anfangspunkt zu einem Endpunkt der Transportoberfläche zu transportieren, wobei die Transportoberfläche keilförmige Abschnitte aufweist, die auf einer Grundfläche der Vibrationsrinne angeordnet sind, wobei die keilförmigen Abschnitte jeweils einen ansteigenden Bereich auf einer zum Anfangspunkt gerichteten Seite aufweisen, über welche die Produkte bei dem Transport gegenüber der Grundfläche angehoben werden, und einen abfallenden Bereich auf einer zum Endpunkt gerichteten Seite aufweisen, an dem die Produkte bei dem Transport auf einen tiefer gelegenen Punkt der Transportoberfläche zurückfallen. Dabei kann die Grundfläche entweder an einem Bauelement vorhanden sein oder eine virtuelle Bezugsebene sein.

Dies ist vorteilhaft, da die erfindungsgemäße Verwendung einer solchen Vibrationsrinne durch die keilförmigen Abschnitte einen automatischen Stranganschluss eines Transportstrangs geschindelter Produkte bei einem aufgetretenen Strangabriss ermöglicht. Das Produkt wird nach einer Lücke im Transportstrang bei diesem keilförmigen Abschnitt aktiv angehoben und fällt sicher auf das vorangehende Produkt des Transportstranges. Ein aktives Anheben bedeutet dabei, dass das Produkt durch seine Bewegung über einen der keilförmigen Abschnitte gegenüber der Grundfläche angehoben wird. Das in dem Transportstrang hintere Produkt erfährt durch den Druck der aufschließenden Produkte eine größere Geschwindigkeit als das Produkt, welches direkt zuvor den Absatz passiert hat, da dieses keinen Staudruck erfährt. Dadurch wird eine Lücke zwischen diesen Produkten verkleinert und geschlossen. Lücken in dem Transportstrang müssen insbesondere bei rechteckigen oder quadratischen Produkten nicht mehr von Hand geschlossen werden. Dadurch kann die Anzahl des notwendigen Bedienpersonals verringert werden und somit eine kostengünstigere Produktion erreicht werden. Zudem werden Störungen in einer Produktionskette mit einer erfindungsgemäßen Vibrationsrinne verringert, die durch einen Abriss des Transportstrangs verursacht werden. Dabei wird eine hohe Zuverlässigkeit bei niedrigen Kosten erreicht, da kein Einsatz einer zusätzlichen Sensorik notwendig ist. Da die Vibrationsrinne einen automatischen Stranganschluss unabhängig von der Form des Produktes ermöglicht, muss diese bei einer Umstellung der Produktform nicht gewechselt werden, wodurch eine Formatumstellzeit verringert wird.

Die Unteransprüche zeigen bevorzugte Weiterbildungen der Erfindung.

Es ist vorteilhaft, wenn die keilförmigen Abschnitte durch mehrere überlappende Einzelelemente gebildet werden. Dies ist vorteilhaft, da somit eine maximale Höhe der keilförmigen Abschnitte einfach an das zu transportierende Produkt angepasst werden kann.

Ebenso vorteilhaft ist es, wenn die keilförmigen Abschnitte unmittelbar aneinander anschließen. Somit kann die Vibrationsrinne eine maximale Anzahl keilförmiger Abschnitte umfassen und Lücken in dem Transportstrang werden nach einer minimalen Strecke geschlossen.

Des Weiteren ist es vorteilhaft, wenn ein Abstand zweier abfallender Bereiche zweier in Transportrichtung aufeinanderfolgender keilförmiger Abschnitte abhängig von der Länge des Produktes gewählt wird und sich insbesondere aus einer Multiplikation der Länge des Produktes mit einem Faktor zwischen 1 und 20 ergibt. Bevorzugt liegt der Faktor dabei zwischen 2 und 5. Durch diese Abstände wird ein Schließen von Lücken besonders effizient unterstützt.

Ebenso ist es vorteilhaft, wenn ein Abstand zweier abfallender Bereiche zweier in Transportrichtung aufeinanderfolgender keilförmiger Abschnitte in einem Bereich zwischen 100mm und 1000mm liegt. Dabei liegt ein Bereich bevorzugt zwischen 200mm und 400mm. Durch diese Abstände wird ein Schließen von Lücken besonders effizient unterstützt.

Insbesondere fallen die Produkte bei dem Transport an dem abfallenden Bereich in Richtung der Grundfläche zurück. Dadurch wird ein Transport entlang der Grundfläche ermöglicht, der unabhängig von der maximale Höhe der keilförmigen Abschnitte ist.

Des Weiteren ist es vorteilhaft, wenn die Transportoberfläche auf zumindest einer Seite, insbesondere auf beiden Seiten, eine gegenüber einer Transportrichtung seitlich gelegene Führung aufweist. Dadurch wird verhindert, dass das Produkt bei einem Transport von der Vibrationsrinne fällt.

Zudem ist es von Vorteil, wenn die Transportoberfläche und die seitlich gelegene Führung durch ein einteiliges Element, vorzugsweise ein Blechelement, gebildet werden. Damit wird eine Anzahl von Verbindungselementen minimiert, die bei einer Vibration der Vibrationsrinne versagen können. Es wird somit die Zuverlässigkeit der Vibrationsrinne gesteigert.

Ebenso von Vorteil ist es, wenn die keilförmigen Abschnitte eine maximale Höhe aufweisen, die größer oder gleich einer Höhe des zu transportierenden Produktes ist, wenn dieses auf der Transportoberfläche befindlich ist. Damit wird sichergestellt, dass zwei aufeinanderfolgende Produkte in dem Transportstrang nicht miteinander kollidieren sondern geschindelt, also teilweise überlappend aufeinander gelegt werden, um den Transportstrang zu schließen.

Des Weiteren ist es von Vorteil, wenn ein Winkel zwischen der Grundfläche und dem ansteigenden Bereich zweier keilförmiger Abschnitte zwischen zwei in Transportrichtung aufeinanderfolgenden keilförmigen Abschnitten zunimmt. Dadurch wird ein Aufholen von einem Produkt zu einem in dem Transportstrang vorangehenden Produkt erleichtert, da der Transport in dem in Transportrichtung gelegenen Abschnitt der Vibrationsrinne langsamer ist und dadurch Lücken schneller geschlossen werden. Damit können zudem weniger keilförmige Abschnitte eingesetzt werden, womit eine Länge der Vibrationsrinne verkürzt werden kann. Ebenfalls können damit größere Lücken geschlossen werden, was wiederum die Prozesssicherheit in einer Produktionskette mit einer Vibrationsfördervorrichtung vergrößert.

Auch ist es von Vorteil, wenn die Grundfläche eine Ebene bildet, da dadurch ein besonders gleichmäßiger Transport ermöglicht wird.

Ebenso vorteilhaft ist es, wenn ein auf der Seite des Endpunktes gelegener hinterer Abschnitt der Grundfläche gegenüber ihrem anfänglichen Verlauf in Richtung der Transportoberfläche angehoben ist. Dabei ist es insbesondere vorteilhaft, wenn die Grundfläche aus zwei Ebenen gebildet wird, die zueinander einen stumpfen Winkel bilden. Dadurch wird ein Aufholen von einem Produkt zu einem in dem Transportstrang vorangehenden Produkt erleichtert, da der Transport in einem solchen steigend geneigten Abschnitt der Vibrationsrinne langsamer ist und dadurch Lücken schneller geschlossen werden. Damit können zudem weniger keilförmige Abschnitte eingesetzt werden, womit eine Länge der Vibrationsrinne verkürzt werden kann. Ebenfalls können damit größere Lücken geschlossen werden, was wiederum die Prozesssicherheit in einer Produktionskette mit einer Vibrationsfördervorrichtung vergrößert.

Ebenso vorteilhaft ist es, wenn die Vibrationsrinne derart in einer Vibrationsfördervorrichtung angeordnet ist, dass bei einem Betrieb der Vibrationsfördervorrichtung der Anfangspunkt der Transportoberfläche höher als der Endpunkt der Transportoberfläche gelegen ist oder der Anfangspunkt der Transportoberfläche niedriger als der Endpunkt der Transportoberfläche gelegen ist. Somit wird eine Transportgeschwindigkeit für das Produkt erhöht oder ein Höhenunterschied kann überwunden werden, wobei ein zurückrutschen der Produkte verhindert wird.

Auch ist es vorteilhaft, wenn die Vibrationsrinne derart in einer Vibrationsfördervorrichtung angeordnet ist, dass bei einem Betrieb der Vibrationsfördervorrichtung der Anfangspunkt der Transportoberfläche auf gleicher Höhe mit dem Endpunkt der Transportoberfläche gelegen ist. Somit wird eine möglichst direkte Verbindung zwischen zwei Produktionseinheiten geschaffen, die dennoch einen Stranganschluss bei geschindelten Produkten ermöglicht.

Auch ist es vorteilhaft, wenn die Transportoberfläche der Vibrationsrinne bei einem Betrieb der Vibrationsfördervorrichtung in Transportrichtung seitlich geneigt ist. Dabei ist es insbesondere vorteilhaft, wenn die Vibrationsrinne bei einem Betrieb der Vibrationsfördervorrichtung in Richtung der seitlichen Führung geneigt ist. Dadurch kann eine gleichmäßige Ausrichtung der Produkte zueinander erreicht werden.

Ferner betrifft die Erfindung die Verwendung einer Vibrationsfördervorrichtung mit einer Vibrationsrinne.

### Kurze Beschreibung der Zeichnungen

Nachfolgend werden Ausführungsbeispiele der Erfindung unter Bezugnahme auf die begleitende Zeichnung im Detail beschrieben. Gleiche, bzw. funktional gleiche Teile sind dabei mit den gleichen Bezugszeichen bezeichnet. In der Zeichnung ist:
- Figur 1: eine schematische Darstellung einer erfindungsgemäßen Vibrationsrinne zum Transport geschindelter Produkte in einer ersten Ausführungsform,
- Figur 2: eine vergleichende Darstellung einer erfindungsgemäßen Vibrationsrinne zum Transport geschindelter Produkte in der ersten Ausführungsform gegenüber einer zweiten Ausführungsform,
- Figur 3: eine schematische Darstellung einer erfindungsgemäßen Vibrationsrinne zum Transport geschindelter Produkte in einer dritten Ausführungsform,
- Figur 4: eine schematische Darstellung einer erfindungsgemäßen Vibrationsrinne zum Transport geschindelter Produkte in einer vierten Ausführungsform,
- Figur 5: eine schematische Darstellung einer in einer Vibrationsfördervorrichtung angeordneten erfindungsgemäßen Vibrationsrinne zum Transport geschindelter Produkte gemäß einer fünften Ausführungsform in einer ersten Ansicht,
- Figur 6: eine schematische Darstellung einer in einer Vibrationsfördervorrichtung angeordneten erfindungsgemäßen Vibrationsrinne von Figur 5 in einer zweiten Ansicht, und
- Figur 7: eine schematische Darstellung einer in einer Vibrationsfördervorrichtung angeordneten erfindungsgemäßen Vibrationsrinne zum Transport geschindelter Produkte gemäß einer sechsten Ausführungsform.

### Ausführungsformen der Erfindung

Die Vibrationsrinne 1 ist eine Vibrationsrinne zum Transport geschindelter Produkte 2 in der Lebensmittelproduktion. Die Vibrationsrinne 1 ist dazu unter anderem bevorzugt aus lebensmittelverträglichen Materialien gefertigt. Die geschindelten Produkte 2 sind Produkte, die im Laufe ihrer Herstellung oder Verpackung in einem Transportstrang über die Vibrationsrinne 1 transportiert werden, wobei jedes Produkt 2 teilweise auf einem in dem Transportstrang vorangehenden Produkt 2 aufliegt, oder zumindest auf diesem aufliegen sollte, falls es nicht zu einem Strangabriss gekommen ist, der durch die Vibrationsrinne 1 zu korrigieren ist. Werden der Vibrationsrinne 1 kontinuierlich Produkte 2 zugeführt, so bilden diese einen Transportstrang.

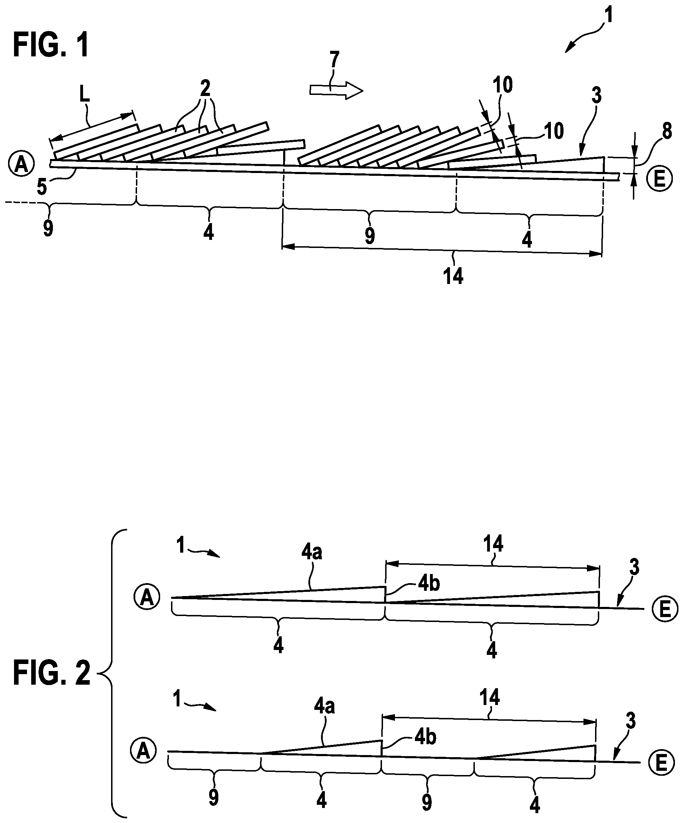

Figur 1 zeigt eine schematische Darstellung einer Vibrationsrinne 1 zum Transport geschindelter Produkte 2 in einer ersten Ausführungsform. In dieser ersten Ausführungsform wird die Vibrationsrinne 1 durch keilförmige Abschnitte 4 und ebene Abschnitte 9 gebildet, die einander entlang einer Transportrichtung 7 abwechseln. Die Transportrichtung 7 ist dabei eine Richtung, in welcher die Produkte 2 von einem Anfangspunkt A der Vibrationsrinne 1 zu einem Endpunkt E der Vibrationsrinne 1 transportiert werden. Dabei ist der Anfangspunkt A der äußerste Punkt der Vibrationsrinne 1 auf einer Seite, auf welcher der Vibrationsrinne die Produkte 2 zugeführt werden, und der Endpunkt E ist der äußerste Punkt der Vibrationsrinne 1 auf einer Seite, auf der die Produkte 2 von der Vibrationsrinne 1 fallen.

Die keilförmigen Abschnitte 4 werden beispielsweise durch keilförmige Elemente gebildet, die in Transportrichtung 7 voneinander beabstandet auf einem ebenen Blech angeordnet sind. Teilbereiche des ebenen Bleches, die zwischen den keilförmigen Elementen liegen, bilden die ebenen Abschnitte 9. In einer alternativen Ausführungsform werden die keilförmigen Abschnitte 4 durch eine Deformation des ebenen Bleches gebildet. Eine solche Deformation und somit die keilförmigen Abschnitte 4 könnte beispielsweise in das ebene Blech eingepresst werden. Dadurch kann die Vibrationsrinne als ein einteiliges Bauteil bereitgestellt werden.

Die Oberseite der ebenen Abschnitte 9 und der keilförmigen Abschnitte 4 bildet eine Transportoberfläche 3. Diese ist dazu eingerichtet die Produkte 2 zu tragen und zu einer Vibration angeregt zu werden, um die Produkte 2 entlang der Transportoberfläche 3 von dem Anfangspunkt A zu dem Endpunkt E der Transportoberfläche 3 zu transportieren. Die in Figur 1 gezeigten geschindelten Produkte 2 sind rechteckige Kekse in einer Seitenansicht. Die Transportoberfläche 3 wird zu einer Vibration angeregt, wenn die gesamte Vibrationsrinne 1, beispielsweise über einen Vibrationsmotor, in Vibration versetzt wird. Dazu wird die Vibrationsrinne 1 in einer Vibrationsfördervorrichtung angeordnet, die einen entsprechenden Vibrationsmotor oder eine andere vibrationserzeugende Vorrichtung umfasst.

Die keilförmigen Abschnitte 4 der Transportoberfläche 3 sind auf einer Grundfläche 5 der Vibrationsrinne 1 angeordnet. Die Grundfläche 5 der Vibrationsrinne 1 entspricht in dieser ersten Ausführungsform einer Ebene in der auch die ebenen Abschnitte 9 liegen. Die Grundfläche 5 ist dabei lediglich eine Bezugsebene, durch welche die Anordnung der keilförmigen Abschnitte 4 definiert wird und ist kein zusätzliches Bauelement.

Die keilförmigen Abschnitte 4 umfassen jeweils einen ansteigenden Bereich 4a und einen abfallenden Bereich 4b. Der ansteigende Bereich 4a liegt dabei auf einer zum Anfangspunkt A gerichteten Seite eines keilförmigen Abschnittes 4. Die Produkte 2 werden bei dem Transport in Transportrichtung 7 gegenüber der Grundfläche 5 angehoben, wenn diese sich über den ansteigenden Bereich 4a der keilförmigen Abschnitte 4 bewegen. Der abfallende Bereich 4b liegt dabei auf einer zum Endpunkt E gerichteten Seite eines keilförmigen Abschnittes 4. Die Produkte 2 fallen bei einem Transport in Transportrichtung 7 auf einen tiefer gelegenen Punkt der Transportoberfläche 3 zurück, wenn diese einen abfallenden Bereich 4b eines keilförmigen Abschnittes 4 erreichen.

In dieser ersten Ausführungsform fallen die Produkte auf einen der ebenen Abschnitte 9 und somit auf die Grundfläche 5 zurück. Dabei ist zu beachten, dass ein Produkt 2, das zurück auf einen tiefer gelegenen Punkt der Transportoberfläche 3 fällt, bei einem Transport geschindelter Produkte 2 auf ein in dem Transportstrang vorangehendes Produkt fallen kann. Dadurch können Lücken in dem Transportstrang geschlossen, da das Produkt 2 auch dann auf das vorangehende Produkt 2 fällt, wenn diese vor dem abfallenden Bereich 4b nicht aufeinander lagen, also nicht geschindelt waren. Bei großen Lücken wird ein Produkt nicht bereits beim passieren eines ersten keilförmigen Abschnitt 4 auf das vorangehende Produkt fallen, sondern eventuell erst nach dem Passieren mehrerer keilförmigen Abschnitt 4.

Der Abstand 14 zweier abfallender Bereiche 4b zweier in Transportrichtung aufeinanderfolgender keilförmiger Abschnitte 4 liegt in einem Bereich zwischen 100 bis 1000mm, bevorzugt 200 bis 400mm. Die Teilung ist abhängig von der Länge L des Produktes 2 in Transportrichtung, wenn dieses auf der Transportoberfläche 3 befindlich ist. Der Abstand 14 kann ebenfalls aus einer Funktion der Länge L des Produktes 2 ermittelt werden. So ist der Abstand bevorzugt in einem Bereich von 1 * L bis 20 * L, bevorzugt 2 * L bis 5 * L gewählt.

Die keilförmigen Abschnitte 4 weisen eine maximale Höhe 8 auf, die größer oder gleich einer Produkthöhe 10 des zu transportierenden Produktes 2 ist, wenn dieses auf der Transportoberfläche 3 befindlich ist. Die maximale Höhe 8 entspricht in dieser ersten Ausführungsform einem direkten Abstand zwischen der Grundfläche 5 und einem Scheitelpunkt der keilförmigen Abschnitte 4, an dem der ansteigende Bereich 4a und der abfallende Bereich 4b aneinander angrenzen. Die Produkthöhe 10 entspricht einer Höhe des Produktes 2, wenn dieses sich auf der Transportoberfläche 3 befindet, ohne auf einem anderen Produkt 2 aufzuliegen.

Figur 2 zeigt eine vergleichende Darstellung der Vibrationsrinne 1 zum Transport geschindelter Produkte in der ersten Ausführungsform gegenüber einer zweiten Ausführungsform. Dabei ist die Vibrationsrinne 1 in der erste Ausführungsform unten und die Vibrationsrinne 1 in der zweiten Ausführungsform oben dargestellt. Die zweite Ausführungsform entspricht im Wesentlichen der ersten Ausführungsform, jedoch schließen die keilförmigen Abschnitte 4 unmittelbar aneinander an. Dies wird durch ein Auslassen der ebenen Abschnitte 9 erreicht. Es ist ersichtlich, dass somit der abfallende Bereich 4b eines beliebigen keilförmigen Abschnittes 4 unmittelbar an den ansteigenden Bereich 4a eines in Transportrichtung 7 auf diesen folgenden keilförmigen Abschnittes 4 anschließt.

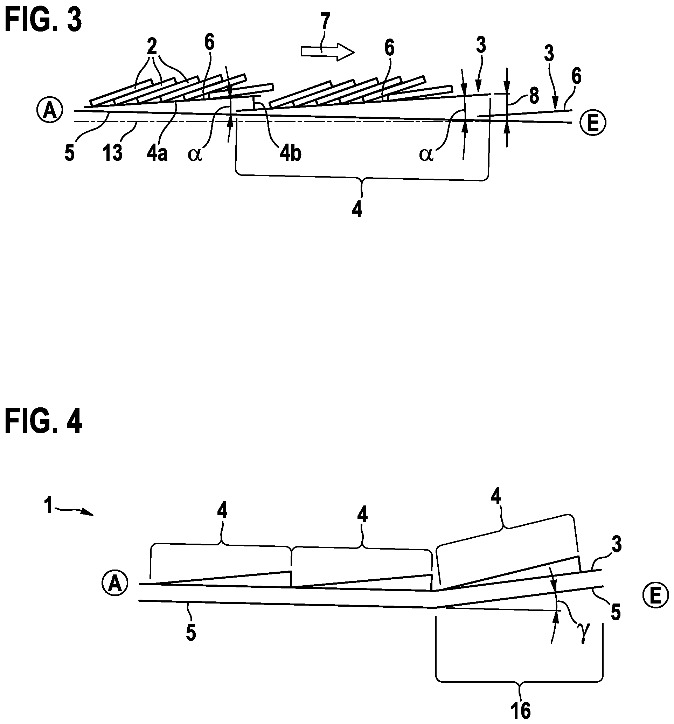

Figur 3 zeigt eine schematische Darstellung einer Vibrationsrinne 1 zum Transport geschindelter Produkte 2 in einer dritten Ausführungsform. Die dritte Ausführungsform entspricht im Wesentlichen der ersten oder zweiten Ausführungsform, jedoch werden die keilförmigen Abschnitte 4 einer einzigen Vibrationsrinne 1 durch mehrere einander überlappende Einzelelemente 6 gebildet. Jedes Einzelelement 6 wird in dieser Ausführungsform aus einem ebenen Blech gebildet. Jedes der Einzelelement 6 ist in einem Winkel α gegenüber der Grundfläche 5 angeordnet. Die Oberflächen der Einzelelemente 6 liegen dabei zueinander parallel, jedoch sind die Einzelelemente 6 in Transportrichtung derart zueinander verschoben, dass eine auf den Anfangspunkt A gerichteten Seite eines Einzelelementes 6 unter einer auf den Endpunkt E gerichteten Seite eines in Transportrichtung 7 folgenden Einzelelementes 6 liegt. Die Oberflächen aller Einzelelemente 6 bilden die Transportoberfläche 3. Dabei bildet jedes Einzelelement 6 den ansteigenden Bereich 4a jeweils eines keilförmigen Abschnittes 4. In alternativen Ausführungsformen können die Einzelelemente 6 um einen zu der Grundfläche 5 parallel liegenden Abschnitt erweitert sein.

Figur 4 zeigt eine schematische Darstellung einer Vibrationsrinne 1 zum Transport geschindelter Produkte 2 in einer vierten Ausführungsform. Die vierte Ausführungsform entspricht im Wesentlichen der ersten bis dritten Ausführungsform, jedoch ist ein auf der Seite des Endpunktes E gelegener hinterer Abschnitt 16 der Grundfläche 5 gegenüber ihrem anfänglichen Verlauf in Richtung der Transportoberfläche 3 angehoben. In der gezeigten vierten Ausführungsform wird die Grundfläche 5 dazu aus zwei Ebenen gebildet, die in einem Winkel γ aufeinander stehen. Es ergibt sich ein Knick in der Vibrationsrinne. In alternativen Ausführungsformen kann die Grundfläche auch auf andere Weise angehoben sein. So könnte beispielsweise eine Wölbung der Grundfläche 5 erfolgen.

In einer nicht in den Figuren gezeigten Ausführungsform, nimmt der Winkel α zwischen der Grundfläche 5 und dem ansteigenden Bereich 4a zweier keilförmiger Abschnitte 4 zwischen zwei in Transportrichtung aufeinanderfolgenden keilförmigen Abschnitten 4 zu. Dazu ist beispielsweise der Winkel α für einen ersten, in Richtung Anfangspunktes A gelegenen keilförmigen Abschnittes 4 als ein Winkel von 1° Grad gewählt. Für einen letzten, in Richtung des Endpunktes E gelegenen keilförmigen Abschnittes 4 ist der Winkel α als ein Winkel von 5° Grad gewählt. Die dazwischenliegenden keilförmigen Abschnitte 4 weisen einen Winkel α auf, der in Transportrichtung 7, beispielsweise um jeweils ein Grad ansteigend, zwischen 1° Grad und 5° Grad liegt. Somit werden Produkte 2 auf einer in Richtung des Endpunktes E gelegenen Seite der Vibrationsrinne 1 langsamer transportiert als auf einer in Richtung Anfangspunktes A gelegenen Seite der Vibrationsrinne 1, da sich die Geschwindigkeit des Transportes mit einem steigenden Winkel α der ansteigenden Bereiche 4a verringert. Somit werden Lücken in dem Transportstrang schneller verringert und geschlossen.

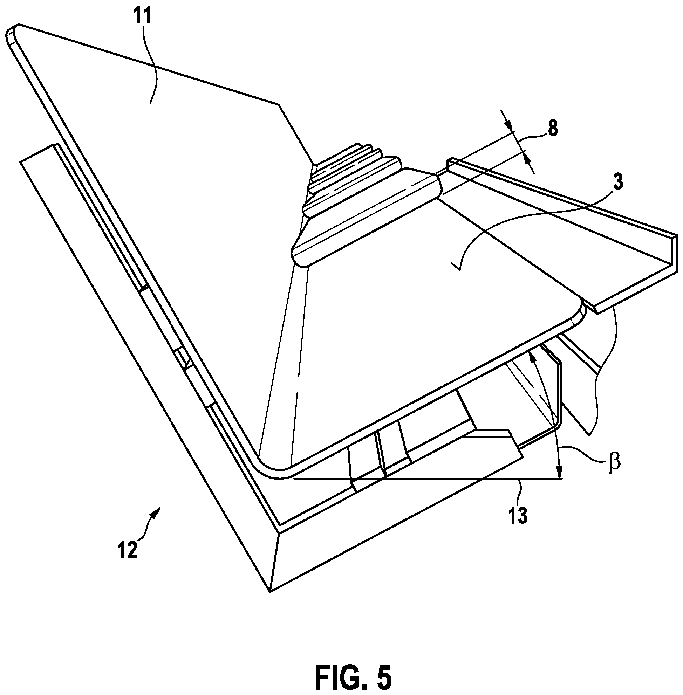

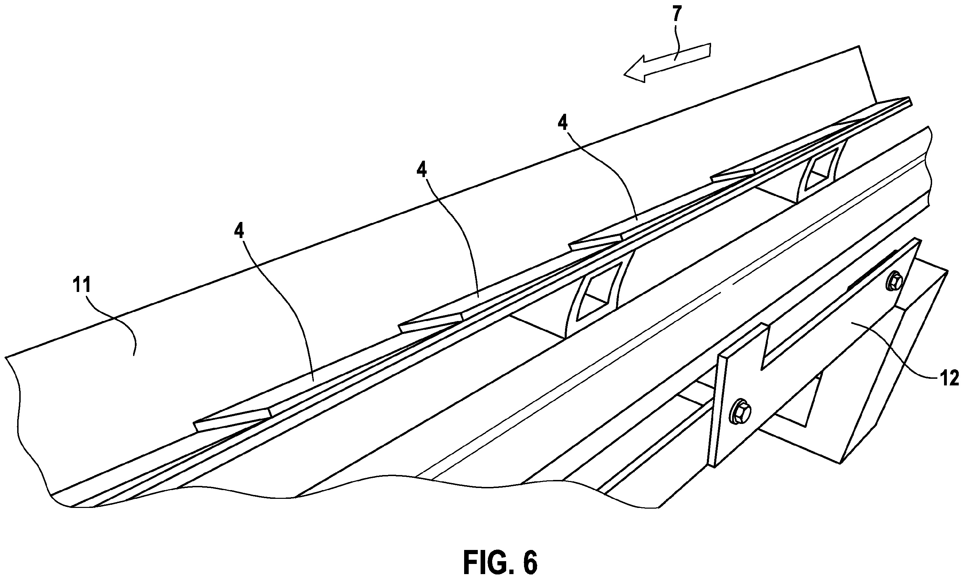

Figur 5 und Figur 6 zeigen eine schematische Darstellung einer Vibrationsrinne 1 zum Transport geschindelter Produkte 2 in einer fünften Ausführungsform. Die fünfte Ausführungsform entspricht im Wesentlichen der zweiten Ausführungsform, jedoch weist die Transportoberfläche 3 in dieser Ausführungsform auf zumindest einer Seite eine gegenüber einer Transportrichtung 7 erste seitlich gelegene Führung 11 auf. Auch wenn dies nicht in den Figuren gezeigt ist, kann eine solche seitlich gelegene Führung auch in den übrigen Ausführungsformen angeordnet werden.

Die erste seitlich gelegene Führung 11 erstreckt sich entlang der Transportoberfläche 3 von dem Anfangspunkt A bis zu dem Endpunkt E. Dabei bildet die erste seitlich gelegene Führung 11 im Wesentlichen einen rechten Winkel mit der Grundfläche 5. Die erste seitlich gelegene Führung 11 und die Transportoberfläche 3 werden durch ein einteiliges Element gebildet. Dies wird in dieser vierten Ausführungsform durch ein entsprechendes Umformen, hierein rechtwinkliges Umbiegen, eines Bleches erreicht, welches auch die ebenen Abschnitte 9 bildet. In den vorher beschriebenen Ausführungsformen könnte die erste seitlich gelegene Führung 11 aber z.B. auch als separates Bauteil oder einteilig an die Transportoberfläche 3 angeformt sein. So könnte die erste seitlich gelegene Führung 11 beispielsweise mit der Transportoberfläche 3 verschweißt sein.

Die in den zuvor aufgeführten Ausführungsformen beschriebe Vibrationsrinne 1 ist dazu eingerichtet, in einer Vibrationsfördervorrichtung 12 angeordnet zu sein. Eine solche Anordnung ist in den Figuren 5 und 6 gezeigt. Dabei weist die gezeigte Vibrationsrinne 1 die zuvor beschriebene vorteilhafte erste seitlich gelegene Führung 11 auf. Die Vibrationsrinne und somit die Transportoberfläche 3 der Vibrationsrinne 1 ist derart in der Vibrationsfördervorrichtung 12 angeordnet, dass diese in Richtung der ersten seitlich gelegene Führung 11 um einen Winkel β aus einer Horizontalen 13 geneigt ist. Der Winkel β ist aus einem Bereich zwischen 1° - 50° Grad gewählt. Bevorzugt beträgt der Winkel β 10° - 40° Grad und besonders bevorzugt 15° bis 25° Grad. Die Vibrationsrinne 1 ist für verschiedenste Formen von Produkten 2 (runde, rechteckige, quadratische, etc.) einsetzbar. Die Produkte 2 (auch runde Produkte) orientieren sich aufgrund der Neigung um den Winkel β immer auf eine Seite, und zwar auf die, welche die keilförmigen Abschnitte 4 aufweist. Die Transportoberfläche 3 ist somit bei einem Betrieb der Vibrationsfördervorrichtung 12 in Transportrichtung 7 um den Winkel β seitlich geneigt. Die Verbindung zwischen der Vibrationsrinne 1 und den übrigen Komponenten der Vibrationsfördervorrichtung 12 ist dabei derart gestaltet, dass diese auf einfache Weise gelöst und geschlossen werden kann. Die Vibrationsrinne 1 wird durch einen in den Figuren 5 und 6 nicht gezeigten Vibrationsmotor in Vibration versetzt.

Die Vibrationsrinne 1 ist derart in der Vibrationsfördervorrichtung 12 angeordnet, dass der Endpunkt E der Transportoberfläche 3 niedriger als der Anfangspunkt A der Transportoberfläche 3 gelegen ist. Die Produkte 2 werden somit von einer in vertikaler Richtung höher gelegenen Ebene auf eine niedriger gelegene Ebene transportiert. Die Vibrationsrinne 1 ist somit gegenüber einer Horizontalen 13 derart geneigt, dass die Produkte 2 abwärts transportiert werden, wodurch der Transport durch die Schwerkraft unterstützt wird. Die Neigung der Vibrationsrinne 1 gegenüber der Horizontalen 13 ist dabei in dieser Ausführungsform ein Winkel von 2° Grad gegenüber der Horizontalen 13.

In alternativen Ausführungsformen ist die Vibrationsrinne 1 derart in der Vibrationsfördervorrichtung 12 angeordnet, dass der Endpunkt E der Transportoberfläche 3 höher als der Anfangspunkt A der Transportoberfläche 3 gelegen ist. Die Produkte 2 werden somit von einer in vertikaler Richtung niedriger gelegenen Ebene auf eine höher gelegene Ebene transportiert. In einer weiteren alternativen Ausführungsformen ist die Vibrationsrinne 1 derart in der Vibrationsfördervorrichtung 12 angeordnet, dass die Grundfläche nicht geneigt, also im Wesentlichen horizontal verläuft.

Damit die Produkte 2 bei einem Aufeinandertreffen eines Produktes 2 mit einem in dem Transportstrang folgenden Produkt 2 sauber geschindelt werden, das heißt, das jeweils aufeinanderfolgende Produkte 2 sicher teilweise aufeinander liegen, ist die Transportoberfläche 3 der Vibrationsrinne 1 mit keilförmigen Abschnitten 4 versehen. Dadurch wird das Produkt 2 nach einer Lücke im Transportstrang an diesem keilförmigen Abschnitt 4aktiv angehoben und fällt sicher auf das vorangehende Produkt 2 des Transportstranges. Das in dem Transportstrang hintere Produkt 2 erfährt durch den Druck der aufschließenden Produkte 2 eine größere Geschwindigkeit als das Produkt 2, welches direkt zuvor den keilförmigen Abschnitt 4passiert hat, da dieses keinen Staudruck erfährt. Dadurch wird eine Lücke zwischen diesen Produkten 2 verkleinert und geschlossen. Auf diese Weise können ungewollte Lücken, aber auch Lücken zwischen geschindelten Produktgruppen so geschlossen werden, dass die Schindelung durchgängig ist. Weiterhin vergleichmäßigen die keilförmigen Abschnitte 4 die geschindelte Anordnung über die Transportstrecke.

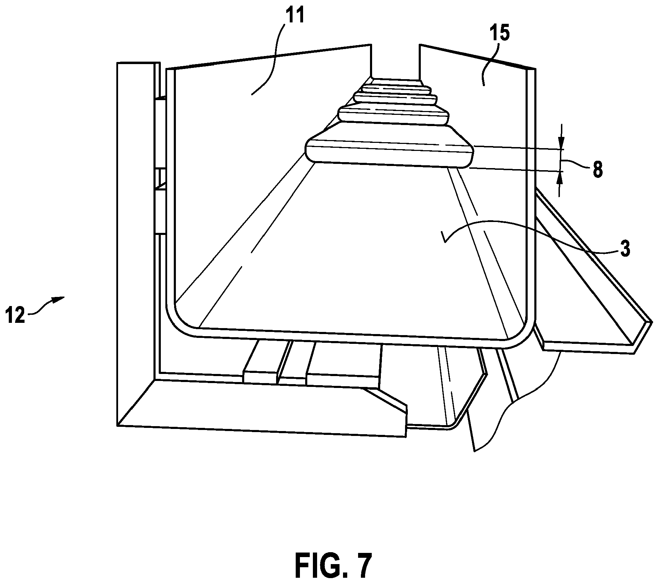

Figur 7 zeigt eine schematische Darstellung einer Vibrationsrinne 1 zum Transport geschindelter Produkte 2 in einer sechsten Ausführungsform. Die sechste Ausführungsform entspricht im Wesentlichen der fünften Ausführungsform, jedoch weist die Transportoberfläche 3 in dieser Ausführungsform auf beiden Seite eine gegenüber einer Transportrichtung 7 seitlich gelegene Führung auf, die aus der ersten seitlich gelegenen Führung 11 und einer zweiten seitlich gelegenen Führung 15 gebildet wird. Die zweite seitliche gelegene Führung 15 erstreckt sich entlang der Transportoberfläche 3 von dem Anfangspunkt A bis zu dem Endpunkt E und liegt auf der gegenüberliegenden Seite der Transportoberfläche 3 in Bezug auf die erste seitliche gelegene Führung 11. Dabei bildet die zweite seitlich gelegene Führung 15 einen rechten Winkel mit der Grundfläche 5. Die erste seitlich gelegene Führung 11, die zweite seitlich gelegene Führung 15 und die Transportoberfläche 3 werden durch ein einteiliges Element gebildet. Dies wird in dieser sechsten Ausführungsform durch ein entsprechendes Umformen, hier ein rechtwinkliges Umbiegen, eines Bleches erreicht, welches auch die ebenen Abschnitte 9 bildet. In den vorher beschriebenen Ausführungsformen könnte die erste seitlich gelegene Führung 11 und die zweite seitlich gelegene Führung 15 aber z.B. auch als separates Bauteil oder einteilig an die Transportoberfläche 3 angeformt sein. Auch wenn dies nicht in den Figuren gezeigt ist, kann eine solche beidseitig gelegene Führung auch in den übrigen Ausführungsformen angeordnet werden. Die Transportoberfläche 3 der Vibrationsrinne liegt dabei in dieser sechsten Ausführungsform in einem Winkel von 0° Grad gegenüber der Horizontalen 13.

Neben der obigen schriftlichen Offenbarung wird explizit auf die Offenbarung der Figuren 1 bis 7 verwiesen.

## Patentansprüche

1. Verwendung einer Vibrationsrinne (1) zum Transport geschindelter Produkte (2), die Vibrationsrinne (1) umfassend:
eine Transportoberfläche (3), die dazu eingerichtet ist, die Produkte (2) zu tragen und zu einer Vibration angeregt zu werden, um die Produkte (2) entlang der Transportoberfläche (3) von einem Anfangspunkt (A) zu einem Endpunkt (E) der Transportoberfläche (3) zu transportieren,
**dadurch gekennzeichnet, dass**
die Transportoberfläche (3) keilförmige Abschnitte (4) aufweist, die auf einer Grundfläche (5) der Vibrationsrinne (1) angeordnet sind, wobei die keilförmigen Abschnitte (4) jeweils:
- einen ansteigenden Bereich (4a) auf einer zum Anfangspunkt (A) gerichteten Seite aufweisen, über welche die Produkte (2) bei dem Transport gegenüber der Grundfläche (5) angehoben werden, und
- einen abfallenden Bereich (4b) auf einer zum Endpunkt (E) gerichteten Seite aufweisen, an dem die Produkte (2) bei dem Transport auf einen tiefer gelegenen Punkt der Transportoberfläche (3) zurückfallen.

2. Verwendung einer Vibrationsrinne (1) nach Anspruch 1, **dadurch gekennzeichnet, dass** die keilförmigen Abschnitte (4) durch mehrere überlappende Einzelelemente (6) gebildet werden.

3. Verwendung einer Vibrationsrinne (1) nach einem der vorangehenden Ansprüche, **dadurch gekennzeichnet, dass** die keilförmigen Abschnitte (4) unmittelbar aneinander anschließen.

4. Verwendung einer Vibrationsrinne (1) nach einem der vorangehenden Ansprüche, **dadurch gekennzeichnet, dass** ein Abstand (14) zweier abfallender Bereiche (4b) zweier in Transportrichtung aufeinanderfolgender keilförmiger Abschnitte (4) abhängig von der Länge L des Produktes 2 gewählt ist und sich insbesondere aus einer Multiplikation der Länge L des Produktes (2) mit einem Faktor zwischen 1 und 20 ergibt.

5. Verwendung einer Vibrationsrinne (1) nach einem der vorangehenden Ansprüche, **dadurch gekennzeichnet, dass** ein Abstand (14) zweier abfallender Bereiche (4b) zweier in Transportrichtung aufeinanderfolgender keilförmiger Abschnitte (4) in einem Bereich zwischen 100mm und 1000mm liegt.

6. Verwendung einer Vibrationsrinne (1) nach einem der vorangehenden Ansprüche, **dadurch gekennzeichnet, dass** die Produkte (2) bei dem Transport an dem abfallenden Bereich (4b) in Richtung der Grundfläche (5) zurückfallen.

7. Verwendung einer Vibrationsrinne (1) nach einem der vorangehenden Ansprüche, **dadurch gekennzeichnet, dass** die Transportoberfläche (3) auf zumindest einer Seite, insbesondere auf beiden Seiten, eine gegenüber einer Transportrichtung (7) seitlich gelegene Führung (11, 15) aufweist.

8. Verwendung einer Vibrationsrinne (1) nach Anspruch 7, **dadurch gekennzeichnet, dass** die Transportoberfläche (3) und die seitlich gelegene Führung (11, 15) durch ein einteiliges Element gebildet werden.

9. Verwendung einer Vibrationsrinne (1) nach einem der vorangehenden Ansprüche, **dadurch gekennzeichnet, dass** die keilförmigen Abschnitte (4) eine maximale Höhe (8) aufweisen, die größer oder gleich einer Produkthöhe (10) des zu transportierenden Produktes (2) ist, wenn dieses auf der Transportoberfläche (3) befindlich ist.

10. Verwendung einer Vibrationsrinne (1) nach einem der vorangehenden Ansprüche, **dadurch gekennzeichnet, dass** ein Winkel (α) zwischen der Grundfläche (5) und dem ansteigenden Bereich (4a) zweier keilförmiger Abschnitte (4) zwischen zwei in Transportrichtung aufeinanderfolgenden keilförmigen Abschnitten (4) zunimmt.

11. Verwendung einer Vibrationsrinne (1) nach Anspruch 1, **dadurch gekennzeichnet, dass** die Grundfläche (5) eine Ebene bildet, oder ein auf der Seite des Endpunktes (E) gelegener hinterer Abschnitt der Grundfläche (5) gegenüber ihrem anfänglichen Verlauf in Richtung der Transportoberfläche (3) angehoben ist.

12. Verwendung einer Vibrationsrinne (1) nach Anspruch 1, wobei die Vibrationsrinne von einer Vibrationsfördervorrichtung umfasst ist, wobei bei einem Betrieb der Vibrationsfördervorrichtung der Anfangspunkt (A) der Transportoberfläche (3) höher als der Endpunkt (E) der Transportoberfläche (3) gelegen ist oder der Anfangspunkt (A) der Transportoberfläche (3) niedriger als der Endpunkt (E) der Transportoberfläche (3) gelegen ist.

13. Verwendung einer Vibrationsrinne (1) nach Anspruch 1, wobei die Vibrationsrinne von einer Vibrationsfördervorrichtung umfasst ist, wobei, die Transportoberfläche (3) der Vibrationsrinne (1) bei einem Betrieb der Vibrationsfördervorrichtung in Transportrichtung seitlich geneigt ist.

## Claims

1. Use of a vibrating trough (1) for transporting shingled products (2), the vibrating trough (1) including:
a transporting surface (3) which is set up to carry the products (2) and to be activated to produce a vibration in order to transport the products (2) along the transporting surface (3) from a starting point (A) to an end point (E) of the transporting surface (3),
**characterized in that**
the transporting surface (3) comprises wedge-shaped portions (4) which are arranged on a floor area (5) of the vibrating trough (1), wherein the wedge-shaped portions (4) comprise in each case:
- an ascending region (4a) on a side oriented toward the starting point (A), by means of which the products (2) are raised in relation to the floor area (5) during transport, and
- a descending region (4b) on a side oriented toward the end point (E), at which the products (2) fall back onto a lower-lying point of the transporting surface (3) during transport.

2. Use of a vibrating trough (1) according to Claim 1, **characterized in that** the wedge-shaped portions (4) are formed by several overlapping individual elements (6).

3. Use of a vibrating trough (1) according to one of the preceding claims, **characterized in that** the wedge-shaped portions (4) connect directly to one another.

4. Use of a vibrating trough (1) according to one of the preceding claims, **characterized in that** a spacing (14) between two descending regions (4b) of two wedge-shaped portions (4) following one after another in the direction of transport is chosen in dependence on the length L of the product 2 and is produced in particular by multiplying the length L of the product (2) by a factor of between 1 and 20.

5. Use of a vibrating trough (1) according to one of the preceding claims, **characterized in that** a spacing (14) between two descending regions (4b) of two wedge-shaped portions (4) following one after another in the direction of transport is within a range of between 100 mm and 1000 mm.

6. Use of a vibrating trough (1) according to one of the preceding claims, **characterized in that** the products (2) fall back in the direction of the floor area (5) at the descending region (4b) during transport.

7. Use of a vibrating trough (1) according to one of the preceding claims, **characterized in that** on at least one side, in particular on both sides, the transporting surface (3) comprises a guide (11, 15) which is located laterally in relation to a direction of transport (7).

8. Use of a vibrating trough (1) according to Claim 7, **characterized in that** the transporting surface (3) and the laterally located guide (11, 15) are formed by a one-piece element.

9. Use of a vibrating trough (1) according to one of the preceding claims, **characterized in that** the wedge-shaped portions (4) comprise a maximum height (8) which is greater than or equal to a product height (10) of the product (2) to be transported when said product is located on the transporting surface (3).

10. Use of a vibrating trough (1) according to one of the preceding claims, **characterized in that** an angle (α) between the floor area (5) and the ascending region (4a) of two wedge-shaped portions (4) increases between two wedge-shaped portions (4) following one after another in the direction of transport.

11. Use of a vibrating trough (1) according to Claim 1, **characterized in that** the floor area (5) forms a plane, or a rear portion of the floor area (5) located on the side of the end point (E) is raised in relation to its initial development in the direction of the transporting surface (3).

12. Use of a vibrating trough (1) according to Claim 1, wherein the vibrating trough is included in a vibratory conveying device, wherein during an operation of the vibratory conveying device, the starting point (A) of the transporting surface (3) is located higher than the end point (E) of the transporting surface (3) or the starting point (A) of the transporting surface (3) is located lower than the end point (E) of the transporting surface (3).

13. Use of a vibrating trough (1) according to Claim 1, wherein the vibrating trough is included in a vibratory conveying device, wherein the transporting surface (3) of the vibrating trough (1) is inclined laterally in the direction of transport during an operation of the vibratory conveying device.

## Revendications

1. Utilisation d'une goulotte vibrante (1) pour le transport de produits disposés en bardeaux (2), la goulotte vibrante (1) comprenant:
une surface de transport (3), qui est conçue pour porter les produits (2) et pour être mise en vibration, afin de transporter les produits (2) le long de la surface de transport (3) depuis un point initial (A) jusqu'à un point final (E) de la surface de transport (3),
**caractérisée en ce que**
la surface de transport (3) présente des parties en forme de coin (4), qui sont disposées sur une face de fond (5) de la goulotte vibrante (1), dans laquelle les parties en forme de coin (4) présentent respectivement
- une zone ascendante (4a) sur un côté orienté vers le point initial (A), par laquelle les produits (2) sont soulevés par rapport à la face de fond (5) lors du transport, et
- une zone descendante (4b) sur un côté orienté vers le point final (E), où les produits (2) retombent à un point situé plus bas de la surface de transport (3) lors du transport.

2. Utilisation d'une goulotte vibrante (1) selon la revendication 1, **caractérisée en ce que** les parties en forme de coin (4) sont formées par plusieurs éléments individuels qui se chevauchent (6).

3. Utilisation d'une goulotte vibrante (1) selon l'une quelconque des revendications précédentes, **caractérisée en ce que** les parties en forme de coin (4) se raccordent directement l'une à l'autre.

4. Utilisation d'une goulotte vibrante (1) selon l'une quelconque des revendications précédentes, **caractérisée en ce qu'**une distance (14) de deux zones descendantes (4b) de deux parties en forme de coin (4) se succédant dans la direction de transport est choisie en fonction de la longueur L du produit (2) et est obtenue en particulier par la multiplication de la longueur L du produit (2) pa un facteur compris entre 1 et 20.

5. Utilisation d'une goulotte vibrante (1) selon l'une quelconque des revendications précédentes, **caractérisée en ce qu'**une distance (14) de deux zones descendantes (4b) de deux parties en forme de coin (4) se succédant dans la direction de transport est comprise dans une plage entre 100 mm et 1000 mm.

6. Utilisation d'une goulotte vibrante (1) selon l'une quelconque des revendications précédentes, **caractérisée en ce que** les produits (2) retombent en direction de la face de fond (5) lors du transport sur la zone descendante (4b).

7. Utilisation d'une goulotte vibrante (1) selon l'une quelconque des revendications précédentes, **caractérisée en ce que** la surface de transport (3) présente sur au moins un côté, en particulier sur les deux côtés, un guidage (11, 15) situé latéralement par rapport à une direction de transport (7).

8. Utilisation d'une goulotte vibrante (1) selon la revendication 7, **caractérisée en ce que** la surface de transport (3) et le guidage situé latéralement (11, 15) sont formés par un élément en une pièce.

9. Utilisation d'une goulotte vibrante (1) selon l'une quelconque des revendications précédentes, **caractérisée en ce que** les parties en forme de coin (4) présentent une hauteur maximale (8), qui est supérieure ou égale à une hauteur de produit (10) du produit à transporter (2), lorsque celui-ci se trouve sur la surface de transport (3).

10. Utilisation d'une goulotte vibrante (1) selon l'une quelconque des revendications précédentes, **caractérisée en ce qu'**un angle (α) entre la face de fond (5) et la zone ascendante (4a) de deux parties en forme de coin (4) augmente entre deux parties en forme de coin (4) se succédant dans la direction de transport.

11. Utilisation d'une goulotte vibrante (1) selon la revendication 1, **caractérisée en ce que** la face de fond (5) forme un plan, ou une partie arrière de la face de fond (5) située sur le côté du point final (E) est soulevée par rapport à son tracé initial en direction de la surface de transport (3).

12. Utilisation d'une goulotte vibrante (1) selon la revendication 1, dans laquelle la goulotte vibrante est entourée par un dispositif de transporteur vibrant, dans laquelle lors d'un fonctionnement du dispositif de transporteur vibrant le point initial (A) de la surface de transport (3) est situé plus haut que le point final (E) de la surface de transport (3) ou le point initial (A) de la surface de transport (3) est situé plus bas que le point final (E) de la surface de transport (3).

13. Utilisation d'une goulotte vibrante (1) selon la revendication 1, dans laquelle la goulotte vibrante est entourée par un dispositif de transporteur vibrant, dans laquelle la surface de transport (3) de la goulotte vibrante (1) est inclinée latéralement dans la direction de transport lors d'un fonctionnement du dispositif de transporteur vibrant.
